# EUROPÄISCHE PATENTANMELDUNG

(11) **EP 3 564 002 A1**
(43) Veröffentlichungstag der Anmeldung: **06.11.2019**
(21) Anmeldenummer: 19000160.2
(22) Anmeldetag: 01.04.2019
(51) Int. Cl.: B29C 44/44, B29C 44/54, C08L 25/06, C07G 1/00, C08L 97/00, B29C 48/00, B29K 25/00, B29K 105/04, B29C 43/00

(54) **EPS-PRODUKT MIT FLAMMSCHUTZ**

(30) Priorität: 01.05.2018 DE 102018003497; 11.03.2019 DE 102019001693
(71) Anmelder: Jackon Applications GmbH, 23970 Wismar (DE)
(72) Erfinder: Falge, Joachim, 23689 Luschendorf (DE); Plate, Mark, 21335 Lüneburg (DE); Tank, Claus, 23560 Lübeck (DE)
(74) Vertreter: Kaewert, Klaus

(57) **Zusammenfassung**

Nach der Erfindung wird der Flammschutz/Brandschutz an EPS-Partikeln vor deren Verschweißen/Versintern auf die unaufgeschäumten Polymerbeads oder vorgeschäumten Partikel aufgetrommelt.

## Beschreibung

Die Erfindung betrifft EPS-Produkte mit Flammschutzmittel, insbesondere zu Bauzwecken.

Ziel der Erfindung ist die Herstellung flammgeschützter/brandgeschützter Polystyrolschaumprodukte, vorzugsweise Polystyrolschaumplatten für Bauzwecke.

Dabei sollen Polystyrolschaumpartikel (auch Polystyrolbeads oder PS-Beads genannt) verwendet werden, die durch Aufschäumen ungeschäumter, treibmittelbeladener Polystyrolpartikel und/oder durch Aufschäumen vorgeschäumter Polystyrolpartikel entstehen.

Aus den Polystyerolschaumpartikeln sollen unmittelbar Platten im Formteilautomaten durch Einfüllen und Verbinden der Polystyrolschaumpartikeln erzeugt werden
oder
es sollen Blöcke im Formteilautomaten durch Einfüllen und Verbinden von Polystyrolschaumpartikeln erzeugt werden und die Blöcke anschließend zu Platten aufgeteilt werden.

Im Formteilautomaten soll eine Verbindung der Polystyrolschaumpartikel durch Beaufschlagung mit Heißdampf im Formteilautomaten erfolgen, so dass die Polystyrolschaumpartikel an der Außenfläche erweichen,

Polystyrol (PS) ist ein thermoplastischer Kunststoff.

Thermoplaste sind Kunststoffe; die unter Erwärmung erweichen und sich in dem Erweichungszustand verformen lassen und nach Abkühlung die erlangte Form behalten. Dieser Vorgang ist oft wiederholbar.

Zu den Thermoplasten zählen zum Beispiel: Acrylnitril-Butadien-Styrol, (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC).

Zu den Massenkunststoffen gehören Polystyrol und Polyolefine wie Polyethylen und Polypropylen.

In obiger Aufzählung finden sich Polymere wie Polycarbonat, Polyethylen, Polypropylen, Polystyrol. Die anderen Kunststoffe sind Copolymere. Das heißt, die Copolymere sind aus verschiedenen Monomeren aufgebaut.

Üblicherweise werden die Kunststoffe zusammen mit Additiven und Füllstoffen verarbeitet. Die Additive sollen dem gewünschten Produkt bestimmte Eigenschaften geben; zum Beispiel erhöhte Festigkeit und/oder erhöhte Alterungsbeständigkeit und/oder erhöhte Elastizität oder eine höhere Wärmebelastbarkeit. Die Additive können auch dazu dienen die Verarbeitung zu erleichtern.

Die Additive können andere Kunststoffe, Substanzen, Substanzgemische und vieles andere sein; zum Beispiel Fasern, Glaskugeln, Wachskugeln.

Die Füllstoffe dienen dazu, den Kunststoff zu strecken.

Mit EPS-Produkten werden Polystyrolschaumprodukte bezeichnet, die auf zwei Wegen hergestellt werden können.

Der eine Weg sieht vor:
- Schmelzeerzeugung mit eingeschlossenem
   Treibmittel in einem Extruder. Das Treibmittel kann zum Beispiel sein, Propan, Butan, Pentan, Hexan und die Isomere dieser Verbindungen wie auch Mischungen davon. Darüber hinaus können Wasser, Stickstoff, Kohlendioxid als Treibmittel eingesetzt werden. Die Menge der Treibmittelanteil kann je nach Beschaffenheit des Treibmittels und des gewünschten Schaumes sehr unterschiedlich sein. So liegen zum Beispiel 4 bis 6 Gew% an Pentan, bezogen auf die Polystyrolmenge im üblichen Rahmen.
- Erzeugung endloser feiner Schmelzestränge mittels kleiner Düsen. Die Düsen können durch verschiedene gleichmäßig verteilte Bohrungen in einer Scheibe gebildet werden, welche am Extruderaustritt angeordnet ist
- wobei die Schmelzestränge nach dem Austritt aus dem Extruder zu Granulat zerkleinert werden. Die Zerkleinerung kann mittels eines an der Scheibe hin- und hergehenden Messers oder mittels eines umlaufenden Messers erfolgen. Es gibt auch andere Wege zur Erzeugung von Schmelzsträngen und zu deren anschließender Granulierung.

Die Granzulierung erfolgt vorzugsweise unter Wasser und unter Druck. Das Wasser kühlt das Granulat. Zur Sicherstellung einer gleichbleibenden Kühlwirkung wird das Wasser temperiert. Das bedingt die Anwendung einer Kühlvorrichtung für das Wasser.

Beim Granulieren verhindert der Druck das Aufschäumen des Granulats. Der dazu notwendige Druck beträgt üblicherweise bis zu 20 Bar. Nach ausreichender Abkühlung ist das Treibmittel in dem

Granulat/Polystyrolpartikeln eingefroren.

Das entstehende Granulat/Polystyrolpartikel hat eine transportfreundliche und lagerfreundliche Form für Lieferungen an Abnehmer
- vor dem Einsatz im Formteilautomaten wird das Granulat/Polystyrolpartikel geschäumt. Mit dem eingeschlossenen Treibmittel wird das Granulat/Polystyrolpartikel wieder erwärmt, bis das Granulat ausreichend weich ist und sich das Treibmittel in dem Granulat/Polystyrolpartikeln miterwärmt hat und ausdehnt. Bei dem Schäumen kann es sich um einen abschließenden Schäumvorgang oder um ein Vorschäumen handelt, dem ein abschließender Schäumvorgang folgt.
- in einem Formteilautomaten werden die entstandenen Polystyrolschaumpartikel zu einer bestimmten Form/Formteil verarbeitet. Dabei können die Formteile unmittelbar/sofort die endgültige Form erhalten oder die Formgebung erfolgt mittelbar, indem zum Beispiel zunächst ein Block erzeugt wird, der anschließend zu Platten aufgeteilt wird.

Bei diesem Verfahren werden zunächst die Schaumpartikel
in den Formteilautomaten eingetragen. Dann werden die Schaumpartikel mit Heißdampf beaufschlagt. Durch diese Bedampfung erweichen die Schaumpartikel an der Oberfläche, so daß die verschiedenen Partikel unter dem Druck in dem Formteilautomaten miteinander verschweißen/versintern (soweit nachfolgend von Verschweißen gesprochen wird, so schließt das die Versinterung ein). Die Schweißtemperatur und der Schweißdruck können dabei variieren. In dem Schweißbereich kann es bei niedriger Schweißtemperatur zu einer Schweißverbindung kommen, wenn der Schweißdruck hoch ist.

Umgekehrt kann der Schweißdruck gering sein, wenn die Schweißtemperatur hoch ist. Wenn der Druck zwischen den Schaumpartikeln gering ist und die Temperatur der Schaumpartikel gering ist und deshalb keine Schweißverbindung zustanden komme, kann gleichwohl noch ein Versintern bzw. Verkleben der Schaumpartikel zustande kommen.

Der Druck entsteht durch die Ausdehnung der Schaumpartikel bei der Erwärmung und gegebenenfalls durch entsprechenden Fülldrück beim Einfüllen der Schaumpartikel in den Formteilautomaten und/oder durch Verringerung des Hohlraumvolumens im Formteilautomaten. Zur Verringerung des Hohlraumvolumens ist nicht zwingend ein Ineinanderschieben großflächiger Teile des Formteilautomaten erforderlich. Ausreichend kann schon sein, mit einem Stempel in den Formhohlraum zu drücken. Das kann genutzt werden, um eine vorgesehene Einwölbung in einem Formteil herzustellen oder um den Formhohlraum für eine Platte auf die notwendige Länge zu verkürzen. Die Festigkeit der Verbindung hängt von der Beschaffenheit der Partikel und den Verarbeitungsbedingungen ab.

Nach ausreichender Abkühlung des Formteils in dem Formteilautomaten kann der Formteilautomat geöffnet und das Formteil bzw. der Block entnommen werden. Der Block wird danach in Platten geschnitten.

Der andere Weg zur Herstellung von Polystyrolschaumpartikel beginnt mit der Herstellung der Polystyrolpartikel im Autoklaven Dabei werden Monomere in einer wässrigen Suspension zur Polymerisierung gebracht. Üblicherweise wird die Polymerisierung mit einem sogenannten Starter unter Erwärmung der Suspension und ständigem Umrühren auf den Weg gebracht. Ein üblicher Starter ist Peroxid.

Wegen der Einzelheiten zum Polymerisieren wird zum Beispiel Bezug genommen auf die DE603200501T2.

Die entstehenden Partikel werden nach Verlassen des Autoklavens mit Treibmittel beladen und in gleicher Weise wie die durch Extrusion und Granulierung entstandenen Partikel geschäumt, in einem Formteilautomaten zu einem Formteil bzw. zu einem Block miteinander verbunden.

Die auf allen Wegen erzeugten EPS-Platten sind herkömmlich mit einem in den Polystyrolschaum eingemischten Flammschutz versehen, Dementsprechend ist das Flammschutzmaterial gleichmäßig in den Polystyrolschaumkügelchen/Partikeln der EPS-Produkte verteilt.

Alternativ wird in der EP1919991 wie auch in der DE 102012217668 vorgeschlagen, die expandierbaren Polystyrolschaumpartikel vor der Verarbeitung zu einem Formteil mit einem Flammschutzmittel zu beschichten.

Dabei werden nach EP 1919991 für die Beschichtung
- Alkalimetallsilikate,
- Metallhydroxide,
- Metallsalz-Hydrate
- Metalloxid-Hydrate
- Wasserglas
vorgeschlagen.

Als geeignete Flammschutzmittel sind in der DE102012217668 aufgeführt
- bromierte Flammschutzmittel, zum Beispiel bromiertes Trialkylphosphat

Nach der DE102012217668 wird das Flammschutzmittel vorzugsweise zusammen mit einem Synergisten eingesetzt. Verschiedene Synergisten sind aufgezählt. Hervorgehoben ist Dicumyl.

Ferner sind zusätzliche Flammschutzmittel empfohlen. Die Empfehlung der DE 102012217668 umfaßt
- roten Phosphor
- Phosphorverbindungen,
- Blähgraphit,
- Triphenylphosphat

Das Flammschutzmittel ist in der DE 102012217668 nicht die einzige Beschichtung. Als Beschichtungskomponenten eignen sich der nach DE 102012217668 beispielsweise auch
- Glycerinester, Zinkstearat, Ester der Zitronensäure und Kieselsäure.
- die Mono-, Di- und Triglyceride, die aus Glycerin und Stearinsäure, Glycerin und 12-Hydroxystearinsäure und Glycerin und Ricinolsäure erhältlich sind
- Mischungen aus Glycerinmono- und -tristearat
- Alkylester von Cyclohexancarbonsäuren
- Phenylester von Alkylsulfonsäuren
- Glycerintribenzoat, insbesondere in Mischung mit Glycerinmonostearat und einer Fällungskieselsäure

Als Beschichtung können nach der DE 102012217668 zusätzlich weitere Stoffe wie Antistatika, Hydrophobisierungsmittel, weitere Flammschutzmittel, feinteilige Kieselsäure und anorganische Füllstoffe aufgebracht werden.

Als Antistatika kommen beispielsweise Verbindungen wie Emulgator (zum Beispiel Gemisch aus sekundärem Natriumalkansulfonaten) oder Tensid in Betracht.

Die Beschichtung kann direkt nach der Herstellung der Schaumpartikel ohne vorherige Trocknung oder nach Aufbereitung und Trocknung auf kompakte Partikel oder auf vorgeschäumte Partikel erfolgen.

Das Aufbringen von Beschichtungskomponenten kann nach der DE 102012217668 in beliebiger Reihenfolge nacheinander oder simultan erfolgen. Dabei können die Beschichtungskomponenten gelöst und/oder dispergiert (z.B. suspendiert oder emulgiert) vorliegen. Je nach Art und Menge der Komponenten kann dies durch einfaches Rühren erfolgen. Bei schlecht mischbaren/dispergierbaren Komponenten können erhöhte Temperaturen und/oder Drücke sowie gegebenenfalls spezielle Mischvorrichtungen erforderlich sein, um eine gleichmäßige Vermischung zu erzielen. Erforderlichenfalls sind nach der DE 102012217668 Hilfsstoffe vorgesehen, welche das Vermischen erleichtern, beispielsweise sind übliche Netzmittel vorgesehen. Außerdem kann die vorgesehene Beschichtungszusammensetzung mit geeigneten Additiven, z.B. mit gebräuchlichen Schutzkolloiden oder Antiabsetzmittel gegen eine Entmischung stabilisiert werden.

Nach der DE 102012217668 wird die Beschichtung in einer Menge von 0,01 bis 1 Gew%, bevorzugt 0,1 bis 0,8Gew%, noch weitere bevorzugt von 0,2 bis 0,5Gew% aufgebracht.

Außerdem weist die DE 102012217668 daraufhin, daß verschiedene Mittel miteinander unverträglich sein können, insbesondere Entmischungen bewirken können. Dem kann nach der DE 102012217668 durch Verträglichkeitsmittel entgegengewirkt werden.

Soweit die Verschweißbarkeit der Schaumpartikel durch die Beschichtung beeinträchtigt wird, empfiehlt die DE 102012217668 den Einsatz eines besonderen Bindemittels.

Nach der DE102012217668 wird die Beschichtung durch Besprühen oder durch Auftrommel in üblichen Mischern auf die Polystyrolschaumpartikel aufgebracht. Desgleichen ist das Eintauchen oder Benetzen der zu beschichtenden Partikel in einer geeigneten Lösung, Dispersion, Emulsion oder Suspension oder auch in einer Pulvermischung möglich.

Auch die vorliegende Erfindung hat sich die Aufgabe gestellt, den Flammschutz/Brandschutz von EPS-Produkten zu verbessern.

Die Aufgabe wird mit den Merkmalen des Hauptanspruches gelöst.

Die Unteransprüche beschreiben bevorzugte Ausführungsformen der Erfindung.

Ein wesentliches Element der Erfindung ist die Verwendung Lignin, das bei der Cellulosegewinnung als Nebenprodukt anfällt.

Das Lignin besteht zu einem wesentlichen Teil aus Kohlenstoff. Vorteilhafterweise können die treibmittelbeladenen unaufgeschäumten Polystyrolbeads/Polystyrolpartikel oder die vorgeschäumten Schaumpartikel vor dem Verschweißen/Versintern mit einem Gemisch von

Flammschutzmittel/Brandschutzmittel beschichtet werden,
wobei das Gemisch mindestens Lignin enthält,
wobei der Ligninanteil mindestens 1 Gew% bezogen auf das Polystyrol,
weiter bevorzugt mindestens 2Gew% bezogen auf das Polystyrol beträgt.

Vorteilhaft ist auch, -wenn die Brandschutzmittel aufgetrommelt werden. Dabei können die Brandschutzmittel auf unaufgeschäumte Polystyrolpartikel oder auf vorgeschäumte Polystyrolpartikel aufgetrommelt werden.

Vorteilhafterweise wird durch das Lignin im Brandfall das Polystyrol vor dem Zutritt des Sauerstoffs aus der Umgebungsluft geschützt ist.

Wahlweise wird für das Brandschutzmittel ein Gemisch verwendet wird, das mindestens aus Lignin und Magnesiumhydroxid besteht.

Für das Gemisch mit Lignin ist wahlweise ein weiteres oder mehrere Flammschutzmittel vorgesehen. das aus folgender Menge von Brandschutzmitteln ausgewählt werden,
- Aluminiumhydroxid (ATH)
- Blähgrafit
- Bimsgestein, Blähton
- Fasern aus Glas oder Keramik
- feuerfester Mörtel
- Kreide, Kalk, Gips
- Mineralien, Feuerstein/Siliziumdioxid, Silikaten, Montmorillorit, Bentonit, Kaolin
- Mikroglaskugeln
- Phosphor (rot)
- Phosphorverbindungen
- Schamotte
- Schwefel (gelb)
- Talkum
- Vermiculit
- Wasserglas

Dabei ist der Anteil des Hydroxids (Aluminiumhydroxid oder Magensiumhydroxid) bevorzugt bis 2 Gew% bezogen auf das Polystyrol, weiter bevorzugt bis 4 Gew% bezogen auf das Polystyrol beträgt.

Besonders wirtschaftlich ist, wenn die Schichtdicke des aufgetrommelten Brandschutzmittels maximal 0,3mm, vorzugsweise maximal 0,2mm, noch weiter bevorzugt maximal 0,1mm und höchst bevorzugt maximal 0,05mm beträgt.

Zum Auftrommel findet als Trommelmischer vorzugsweise eine an beiden Enden offene umlaufende, liegende oder geneigt angeordnete Trommel Verwendung, wobei die geschäumten oder ungeschäumten Polystyrolpartikel und das Brandschutzmittel an einem Trommelende aufgegeben werden und am anderen Trommelende austreten.

Zum Beschichten mit dem Flammschutzmittel/Brandschutzmittel können verschiedene Techniken genutzt werden:
- Die festen Brandschutzmittel können aufgetrommelt werden.
- Die flüssigen Brandschutzmittel können aufgesprüht werden.
- Auch feste Brandschutzmittel können aufgesprüht werden, in dem die Brandschutzmittel vorher in einem Lösemittel aufgelöst werden. Diese Lösung aufgesprüht wird und anschließend das Lösemittel verdampft wird.
- Falls die Brandschutzmittel sich im Lösemittel nicht lösen, können die Polystyrolpartikel bzw. die Schaumpartikel auch mit Emulsionen, Dispersionen oder Suspensionen von Brandschutzmittel und Lösemittel besprüht werden.
- Die Polystyrolpartikel/Schaumpartikel können auch in Lösungen, Emulsionen, Dispersionen oder Suspensionen von Flammschutzmittel und Lösemittel getränkt werden, überschüssiges Lösemittel entfernt und die Polystyrolpartikel/Schaumpartikel abschließend getrocknet werden, dabei verbleibt auch eine Schicht von Flammschutzmittel auf den Polystyrolpartikeln/Schaumpartikeln.

In der Beschichtung hat das Lignin schon aufgrund seines höheren Schmelzpunktes und seines höheren Flammpunktes eine schützende Wirkung für das eingeschlossene Polystyrol der Schaumpartikel.

Vorzugsweise wird das Lignin in der Beschichtung im Falle eines stärkeren Brandes von dem Umgebungssauerstoff abgeschirmt, so daß nur die flüchtigen Bestandteile aus dem Lignin entweichen und von dem Lignin ein Kohlenstoffgerüst bleibt, das die Schaumpartikel umgibt. Dabei ist zwar ein Abschmelzen des Polystyrols bei lang dauerndem Brand und entsprechender Erwärmung des Polystyrols unvermeidbar. Das Polystyrol kann jedoch beim Fassadenbrand nicht mehr leicht herunterfließen und den Brand dadurch anfachen.

Zur Abschirmung durch das Lignin kann schon ein dünner Materialauftrag auf den PS-Kügelchen/Partikel ausreichend sein. Günstig sind inerte Stoffe, die sich leicht in eine Suspension bringen lassen und dabei das Lignin aufnehmen. Wenn die Suspension in einem Bad gehalten wird, können die Schaumpartikel in das Bad getaucht werden und zugleich das Lignin und das inerte Material aufnehmen.

Es kann auch erst das Lignin auf die Schaumpartikel aufgebracht werden und anschließend das inerte Material auf das Lignin aufgebracht werden. Wahlweise kann auch anstelle des inerten Materials oder zusätzlich zu dem inerten Material ein Flammschutzmittel eingesetzt werden, das an der Oberfläche des Lignins den Umgebungssauerstoff verdrängt oder auch bindet.

Vorzugsweise beträgt die Schichtdicke auf den Schaumpartikeln maximal 0,3mm, noch weiter bevorzugt maximal 0,2mm und höchst bevorzugt maximal 0,1mm. Die Schichtdicke kann auch 0,05 mm und weniger betragen. Die Schichtdicke hängt auch vom gewählten Flammschutzmittelt, Synergisten und weiteren aufgetrommelten Wirkstoffen ab.

Die Flammschutzmechanismen werden insbesondere von der chemischen Struktur des Flammschutzmittels und seiner Wechselwirkung mit dem Polymer bestimmt.

Flammschutzmittel dienen zur Hemmung, im Idealfall zur Vermeidung der Entzündung, Flammenausbreitung und/oder Brandlast. Man kann zwischen physikalischen und chemischen Wirkungsweisen unterscheiden.

### Zu den chemischen Mechanismen:

Mittels einer Reaktion in der Gasphase wird durch das Flammschutzmittel der Radikalmechanismus unterbrochen und somit die Oxidationsreaktion gehemmt, die effektive Verbrennungsenthalpie des Materials sinkt. Dadurch wird der Wärmeeintrag der Flamme verringert und die Wärmefreisetzung reduziert.

Typische Radikalfänger sind halogenhaltige Flammschutzmittel auf Basis von Chlor oder Brom (indiskutabel für die Neuzeit).

### Zu den physikalischen Mechanismen:

Die Abgabe von Wasser bewirkt eine Kühlung der Flamme. Die endotherme Abgabe nicht brennbarer Gase wie H₂O, CO₂ oder NH₃ verursacht eine Brennstoffverdünnung. Durch Erhöhung der Verdampfungsenthalpie und Reduzierung der effektiven Verbrennungsenthalpie kann dem Brand entgegengewirkt werden. Beispiele sind Alumiumtrihydroxid (ATH), Magnesiumhydroxid und borhaltige Verbindungen.

Inerte Füllstoffe ersetzen brennbares durch nicht brennbares Material und bewirken eine Verdünnung.

Dabei geht die Erfindung von der Erkenntnis aus, daß unter den vielen bekannten Brandschutzmitteln nur wenige Brandschutzmittel ständig angewendet werden. Manche Brandschutzmittel sind bloßer papierner Stand der Technik. Dazu gehört unter anderem das Lignin.

In der DE 102009050546 wird die Verwendung eines Flammschutzmittels/Brandschutzmittels im Zusammenhang mit faserverstärktem Polystyrol vorgeschlagen. Dabei soll es sich um Naturfasern von Pflanzen handeln. Allerdings sollen Pflanzen ausgewählt werden, die noch nicht verholzt sind, also nur eine geringe Menge oder gar keine Menge Lignin enthalten. Damit weist die Druckschrift nicht auf Lignin, sondern von Lignin weg.

Die WO 2011047804 stimmt inhaltlich mit der DE 102009050546 überein.

Auch die WO 2017118765 beschreibt eine Ausrüstung von Fasern mit Flammschutz/Brandschutz zur Verwendung in einem Polystyrol, auch in einem geschäumten Produkt. Im Unterschied zu den in DE102009050546 beschriebenen Fasern sind nach der WO2017118765 Lignin haltige Fasern gemeint.

Die DE 102017100313 stimmt inhaltlich mit der WO 2017118765 überein.

Die WO 2014184273 beschreibt zwar eine Polyolefinmatrix mit einem eingemischten Lignin. Es handelt sich jedoch um einen Vorschlag zur Modifizierung von WPC (wood plastic composition), das als Holzersatz angesehen werden kann.

Die DE 102007054549 beschreibt auch eine Polyolefinmatrix für WPC mit einem eingemischten biobasierenden Kunststoff aus Lignin.

Die DE 2436166 aus dem Jahre 1974 beschreibt ein Flammschutzmittel für verschiedene Zwecke, unter anderem für den Schutz von Polystyrol. Der bekannte Flammschutz soll keine giftigen Gase bilden und lange Zeit anhalten. Der bekannte Flammschutz soll durch Schmelzen einer Ligninverbindung mit einer Harnstoffverbindung in der Hitze herstellbar sein. Als Ligninverbindung kommen Lignin, Ligninsulfonsäure oder Ligninsulfonat in Frage. Als Harnstoffverbindung kommen Harnstoff oder Harnstoffderivate in Frage. Danach können die Massen mit einem thermoplastischen Kunststoff, einem Phosphorsäurederivat oder einem mehrwertigen Metallsalz Anwendung finden. Die Ligninsulfonsäure (Lignosulfonsäure) kann nach der DE 2436166 hergestellt werden, indem man Lignin mit schwefliger Säure, Hydrogensulfit oder Sulfit umsetzt. Bei der Neutralisation der Ligninsulfonsäure kann man Alkalimetallsalze und Erdalkalimetallsalze (von Na, K, Mg, Ca, Ba oder Ammonisum) erhalten,

Die vorgesehenen Phosphorsäuren und Phosphorsäurederivate umfassen nach der DE 2436166 phosphorige Säure, unterphosphorige Säure, Phosphorsäure, Metaphosphorsäure, Polymetaphosphorsäure, Polyphosphorsäure und Alkalimetallsalze oder Erdalkalimetallsalze.

Das Verhältnis der verschiedenen Bestandteile liegt nach der DE 2436166 im Bereich 0,3 bis 10 Gewichtsteiles des Harnstoffs oder der Harnstoffverbindung auf 1 Gewichtsteiles des Lignins, der Ligninsulfonsäure oder des Ligninsulfonats.

Der Einsatz von Lignin hat sich seitdem nicht durchsetzen können.

Die Erfindung hat sich diesem seit 1974 bekannten Flammschutzmittel wieder zugewandt, um dieses Flammschutzmittel beim Flammschutz/Brandschutz an Polystyrolschaumpartikeln einzusetzen, die für die Herstellung von Dämmplatten aus Polystyrolschaumpartikeln vorgesehen sind.

Nach der Erfindung wird ein einsatzbares Brandschutzmitteln mit den Merkmalen des Hauptanspruches erreicht. Die Unteransprüche beschreiben vorteilhafte Ausführungsformen.

Vorzugsweise wird das Lignin in der Beschichtung mit anderen Flammschutz/Brandschutzmitteln kombiniert.

Andere infrage kommende Flammschutz/Brandschutzmittel sind
- Aluminiumhydroxid (ATH)
   ATH zersetzt sich bei ca. 225 Grad Celsius unter Abgabe großer Mengen an H₂O und trägt somit zur Kühlung bei einem Brand bei und reduziert zu einem großen Anteil die Rauchgasentwicklung
- Blähgrafit
   Im Brandfall expandiert der Blähgrafit durch Hitzeeinwirkung auf das Mehrhundertfache des ursprünglichen Volumens und bildet eine Isolierschicht auf der Oberfläche der Kunststoffschaumpartikel. Sie verlangsamt die Brandausweitung; sie hemmt die Ausbreitung toxischer Gase und Rauch.
- Bimsgestein, Blähton
- Fasern aus Glas oder Keramik
- feuerfester Mörtel
- Kreide, Kalk, Gips
- Lignin, lignocellulose Rohstoffe

Lignin bildet im Brandfall nach der Erfindung einen Kohlenstoffmantel um die Schaumpartikel.
- Magnesiumhydroxid
- Mineralien, Feuerstein/Siliziumdioxid, Silikaten,
   Montmorillorit, Bentonit, Kaolin
- Mikroglaskugeln
- Phosphor (rot)

Roter Phosphor mit einem Schmelzpunkt von 44 Grad Celisus läßt bei der Pyrolyse von Thermoplasten nicht brennbare Gase entstehen.

In der kondensierten Phase können phosphorhaltige Flammschutzmittel die Verkohlung fördern.
- Phosphorverbindungen wie Phosphatester
- Schamotte
- Schwefel (gelb)
   Dieser Schwefel mit einem Schmelzpunkt von 115 Grad Celsius hat eine ähnliche Funktion wie Phosphor
- Talkum
- Vermiculit
   Vermiculit mit einem Schmelzpunkt über 1300 Grad Celsius ist inertes Material. Es schwächt die Brennstoffkettenreaktion. Lokale Orte des Vermiculits bleiben erhalten.
- Wasserglas

Vorzugsweise findet eine Mischung aus Lignin und ATH oder Magnesiumhydroxid und/oder Blähgrafit Anwendung. Dabei kann das Lignin noch weiter bevorzugt in der Flammschutzmischung maximal einen Anteil von 50Gew% aufweisen.

### Nach der Erfindung wird das ausgewählte

Flammschutzmittel/Brandschutzmittel-Gemisch vorzugsweise auf die unaufgeschäumten treibmittelhaltigen Polystyrolbeads oder auf die vorgeschäumten Schaumpartikel aufgetrommelt. Die so beschichteten Beads bzw. die so beschichteten vorgeschäumten Schaumpartikel können für den Einsatz in einem Formteilautomaten weiter aufgeschäumt werden, Dabei zeigt sich, dass der aufgetrommelte Flammschutz ein Aufschäumen vor dem Eintragen in dem Formteilautomaten zumindest im Wesentlichen übersteht. Des Weiteren zeigt sich bei der Verarbeitung im Formteilautomaten, dass die Schaumpartikel sich unter dem üblichen Druck und bei üblicher Erwärmung in dem Formteilautomaten verbinden, auch wenn die Flammschutzmittel nicht verschweißbar sind. Die Erfindung führt das darauf zurück, daß die Flammschutzmittel nach dem Erweichen der Partikeloberfläche in die Oberfläche eingedrückt werden und ausreichende Polystyrolmasse eines jeden Schaumpartikel an den Flammschutzmitteln vorbei den Weg zu Polystyrolmasse eines benachbarten Schaumpartikels findet.

Beim Auftrommeln findet eine drehbewegliche Trommel Anwendung.

Die Trommel kann intermittierend oder kontinuierlich betrieben werden.

Bei intermittierendem Betrieb wird eine Menge von Polystyrolbeads oder Schaumpartikeln mit einer zugehörigen Menge des Gemisches von Flammschutzmitteln/Brandschutzmittel in die Trommel aufgegeben und die Trommel solange gedreht, bis sich an den Beads bzw. Schaumpartikeln eine Flammschutzmittelschicht hat.

Die Trommel kann aufrecht stehen und oben offen sein und nach Fertigstellung des Flammschutzes/Brandschutzes zur Entleerung gekippt werden,
Von Vorteil können Schaufeln und Rührer sein, die in der Trommel angeordnet sind und die Beads oder Schaumpartikel und das Flammschutzmaterial/Brandschutzmaterial umwälzen. Dabei können die Schaufeln
- fest in der Trommel angeordnet oder
- gegenüber drehbeweglichen Trommel fest angeordnet oder
- zusätzlich zu der Drehbewegung der Trommel noch eine Drehbewegung ausführen können

Wahlweise findet auch eine oben offene Trommel Anwendung, deren Mantel gegenüber dem Trommelboden zum Entleeren der Trommel anhebbar ist.

Bei kontinuierlichem Betrieb ist vorzugsweise eine an beiden Stirnflächen offene horizontal oder geneigt angeordnete Trommel vorgesehen. Die Trommel wird an einem Ende mit dem Einsatzmaterial beschickt und am anderen Ende entleert. Dabei kann der Durchsatz durch die Trommel durch Änderung der Trommelneigung und/oder durch Änderung der Trommeldrehzahl beeinflußt werden. Von Vorteil sind auch Schaufeln oder dergleichen Einbauten, mit denen eine Förderwirkung auf das Einsatzmaterial ausgeübt wird, so daß auch die horizontale Anordnung möglich ist. Mit den Einbauten kann auch bewirkt werden, daß das Einsatzmaterial in der Trommel hoch gefördert werden kann, so daß ein Teil des Einsatzmaterials aus der Höhe in das übrige Einsatzmaterial fällt, der sich unten in der Trommel befindet. Das fördert die Verbindung des Brandschutzmaterails mit den ungeschäumten oder vorgeschäumten Polystyrolschaumpartikeln.

Die Haftung zwischen den Flammschutzmitteln/Brandschutzmitteln bzw. der Flammschutzmittel/Brandschutzmittel an dem Schaumpartikeln kann durch Haftvermittler verbessert werden. Haftvermittler sind zum Beispiel Zn-Stearat, Glycerinmonostearat und Gycerintristearat. Darüber hinaus kann die Haftung zwischen den Polystyrolschaumpartikeln und den Flammschutzmittel/Brandschutzmittel durch eine Vorwärmung des Einsatzmaterials verbessert werden, gegebenenfalls auch durch Zusatz von Klebehilfsmitteln.

Die Zugabe von Beschichtungshilfsmitteln und auch die Menge der Beschichtungsmittel findet ihre Grenze darin, daß die Verschweißbarkeit der Schaumpartikel zum Endprodukt erhalten bleiben.

Zur Bewertung der erfindungsgemäßen Beschichtung mit Lignin sind Brandversuche mit drei Arten von Polystyrolschaumplatten durchgeführt worden. Alle Plattenarten sind aus Polystyrolschaumpartikeln hergestellt worden.

Bei den einen Vergeleichsplatten sind die Polystyrolschaumpartikel ohne erfindungsgemäße Flammschutzmittel im Formteilautomaten zu Blöcken miteinander verbunden und anschließend zu Platten aufgeschnitten worden. Bei den zweiten Vergleeichsplatten sind die Polystyrolschaumpartikel nur mit 4 Gew% Magnesiumhydroxid als Flammschutzmittel im Formteilautomaten zu Blöcken miteinander verbunden und anschließend zu Platten aufgeschnitten worden.

Bei den Platten entsprechend der Erfindung sind die Polystyrolschaumpartikel mit erfindungsgemäßen Flammschutzmitteln beschichtet(aufgetrommelt) worden, bevor sie im Formteilautomaten zu Blöcken miteinander verbunden und anschließend zu Platten aufgeschnitten worden sind. Das erfindungsgemäße Flammschutzmittel besteht im Test aus 2Gew% Lignin und 4 Gew% Magnesiumhydroxid sowie einem üblichen Haftvermittler aus Zn-Stearat, Glycerinmonostearat und Gycerintristearat. Die Gew% beziehen sich auf die Polystyrolmenge.

Die Polystyrolschaumpartikel besitzen im Übrigen gleiche Beschaffenheit. Das schließt einen Treibmittelanteil von 5Gew% Pentan ein, bezogen auf die Polystyrolmenge.

Die einen wie die anderen Polystyrolschaumpartikel werden anschließend direkt mit Wasserdampf vorgeschäumt, 24 h ruhen gelassen und dann in einem Formteilautomaten in gleicher Weise mit Heißdampf beaufschlagt, so daß die Polystyrolschaumplatten weiter aufschäumen und miteinander verschweißen. Dabei bestehen 50mm dicke Polystyrölschaumplatten.

Die Polystyrolschaumplatten unterscheiden sich nicht in Bezug auf die Druck- und Zugfestigkeit. Der Lambdawert und die Dichte sind für die Platten ähnlich. Das Gemisch von Lignin und Magnesiumhydroxid hat sich damit nicht negative auf die Verschäumbarkeit des Polystyrols, das Aneinanderhaften der EPS-Schaumpartikel und die physikalischen Eigenschaften des Schaums ausgewirkt. Deutlich positiv hat sich die Mischung von Lignin und Magnesiumhydroxid der Brandeigenschaft des EPS Schaums bemerkbar gemacht. Das Vergleichsmuster ohne Lignin und Magnesiumhydroxid besteht den Test für die Euroklasse E (Klassifizierung entsprechend DIN EN 13501-1, geprüft nach DIN EN ISO 11925-2) nicht, das Muster entsprechend der Erfindung mit Lignin und Magnesiumhydroxid besteht dagegen den Test für die Euroklasse E. Auch das zweite Vergleichsmuster nur mit Magnesiumhydroxid besteht den Euroklasse E Test nicht.

Die Entzündbarkeit von Produkten wird bestimmt, indem die Ausbreitung einer kleinen Flamme an der vertikalen Oberfläche eines Probekörpers ermittelt wird, nachdem eine kleine Flamme (in Streichholzgröße) an die Kante des Probekörpers für 15 s gehalten wurde. Das Auftreten von brennendem Abtropfen wird bestimmt, indem beobachtet wird, ob sich das unter dem Probekörper angeordnete Filterpapier entzündet oder nicht.

| **aVersuch** | **Flammschutzmittel** | **Dichte *kg*/*m³*** | **Lambda *mW*/*mK*** | **Brandverhalten *Euroklasse E*** |
|---|---|---|---|---|
| Vergleich 1 | Kein | 16,7 | 37,7 | Nicht bestanden |
| Vergleich 2 | Magnesiumhydroxid (4 %) | 16,5 | 37,0 | Nicht bestanden |
| Referenz | Lignin (2%) + Magnesiumhydroxid (4%) | 16,1 | 36,3 | Bestanden |

In der Zeichnung sind zwei Verfahrensabläufe schematisch dargestellt.

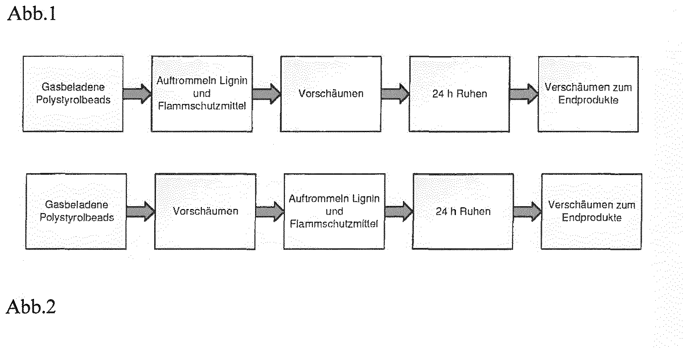

Beide Verfahrensabläufe sehen vor, dass gasbeladene Polystyrolpartikel vor dem Einsatz in einem Formteilautomaten vorgeschäumt werden.
Nach Abb. 1 erfolgt die erfindungsgemäße Beschichtung der Polystyrolpartikel mit Brandschutzmittel vor dem Vorschäumen.
Nach Abb.2 erfolgt die erfindungsgemäße Beschichtung der Polystyrolpartikel nach dem Vorschäumen.

## Patentansprüche

1. Herstellung flammgeschützter/brandgeschützter Polystyrolschaumprodukte, vorzugsweise Polystyrolschaumplatten für Bauzwecke,
wobei Polystyrolschaumpartikel verwendet werden, die durch Aufschäumen ungeschäumter, treibmittelbeladener Polystyrolpartikel und/oder durch Aufschäumen vorgeschäumter Polystyrolpartikel entstehen,
wobei die Polystyrolschaumprodukte, insbesondere die Polystyrolschaumplatten, im Formteilautomaten durch Einfüllen und Verbinden der Polystyrolschaumpartikeln unmittelbar erzeugt werden
oder
die die Polystyrolschaumpartikel mittelbar durch Einfüllen und Verbinden von Polystyrolschaumpartikeln in den Formteilautomaten und anschließende Bearbeitung erzeugt werden, insbesondere Polystyrolschaumplatten durch Herstellen von Blöcken im Formteilautomaten und deren anschließende Aufteilung zu Platten
wobei die Verbindung der Polystyrolschaumpartikel durch Beaufschlagung mit Heißdampf im Formteilautomaten erfolgt, so dass die Polystyrolschaumpartikel an der Außenfläche erweichen und Verschweißen oder Versintern,
**dadurch gekennzeichnet,**
**daß** die treibmittelbeladenen unaufgeschäumten Polystyrolpartikel oder die vorgeschäumten Schaumpartikel vor dem Verschweißen/Versintern mit einem Gemisch von Flammschutzmittel/Brandschutzmittel beschichtet werden,
wobei das Gemisch mindestens Lignin enthält,
wobei der Ligninanteil mindestens 1 Gew% bezogen auf das Polystyrol, weiter bevorzugt mindestens 2Gew% bezogen auf das Polystyrol beträgt.

2. Herstellung nach Anspruch 1,
**dadurch gekennzeichnet, daß** die Brandschutzmittel aufgetrommelt werden.

3. Herstellung nach Anspruch 2,
**dadurch gekennzeichnet, daß** die Brandschutzmittel auf unaufgeschäumte Polystyrolpartikel oder auf vorgeschäumte Polystyrolpartikel aufgetrommelt werden.

4. Herstellung nach einem der Ansprüche 1 bis 3, **dadurch gekennzeichnet,**
**daß** durch das Lignin im Brandfall das Polystyrol vor dem Zutritt des Sauerstoffs aus der Umgebungsluft geschützt ist.

5. Herstellung nach Anspruch 4,
**dadurch gekennzeichnet,**
**daß** für das Brandschutzmittel ein Gemisch verwendet wird, das mindestens aus Lignin und Magnesiumhydroxid besteht.

6. Herstellung nach einem der Ansprüche 1 bis 5
daß für das Gemisch mit Lignin ein weiteres oder mehrere Flammschutzmittel vorgesehen sind, die aus folgender Menge von Brandschutzmitteln ausgewählt werden,
- Aluminiumhydroxid (ATH)
- Blähgrafit
- Bimsgestein, Blähton
- Fasern aus Glas oder Keramik
- feuerfester Mörtel
- Kreide, Kalk, Gips
- Mineralien, Feuerstein/Siliziumdioxid, Silikaten,
Montmorillorit, Bentonit, Kaolin
- Mikroglaskugeln
- Phosphor (rot)
- Phosphorverbindungen
- Schamotte
- Schwefel (gelb)
- Talkum
- Vermiculit
- Wasserglas

7. Herstellung nach Anspruch 5 oder 6,
**dadurch gekennzeichnet,**
**daß** der Anteil des Hydroxids (Aluminiumhydroxid oder Magensiumhydroxid) bevorzugt bis 2 Gew% bezogen auf das Polystyrol, weiter bevorzugt bis 4 Gew% bezogen auf das Polystyrol beträgt.

8. Herstellung nach einem der Ansprüche 1 bis 7,
**dadurch gekennzeichnet,**
**daß** die Schichtdicke des aufgetrommelten Brandschutzmittels maximal 0,3mm, vorzugsweise maximal 0,2mm, noch weiter bevorzugt maximal 0,1mm und höchst bevorzugt maximal 0,05mm beträgt.

9. Herstellung nach einem der Ansprüche 2 bis 8, **dadurch gekennzeichnet, daß** als Trommelmischer eine an beiden Enden offene umlaufende, liegende oder geneigt angeordnete Trommel verwendet wird, wobei die geschäumten oder ungeschäumten Polystyrolpartikel und das Brandschutzmittel an einem Trommelende aufgegeben werden und am anderen Trommelende austreten.
